# EUROPÄISCHE PATENTSCHRIFT

(11) **EP 0 471 342 B1**
(45) Veröffentlichungstag und Bekanntmachung des Hinweises auf die Patenterteilung: **25.01.1995**
(21) Anmeldenummer: 91113582.0
(22) Anmeldetag: 13.08.1991
(51) Int. Cl.: F25D 31/00, F25D 21/02, G05D 23/275, G01R 27/22

(54) **Anordnung, insbesondere für einen Getränkeautomaten mit einem zur Vorratshaltung, Kühlung und Karbonisierung von Wasser dienenden Behälter**
Arrangement, in particular for a beverage dispenser with a container for storing, cooling and carbonizing water
Agencement, en particulier pour un appareil de distribution de boissons avec un récipient pour le stockage, le refroidissement et la carbonisation de l'eau

(30) Priorität: 16.08.1990 DE 4025985
(43) Veröffentlichungstag der Anmeldung: 19.02.1992
(73) Patentinhaber: Bosch-Siemens Hausgeräte GmbH, 81669 München (DE); THE COCA-COLA COMPANY, Atlanta, Georgia 30301 (US)
(72) Erfinder: Färber, Karlheinz, Dipl.-Ing. (FH), W-7928 Giengen (DE); Deininger, Anton, Dipl.-Ing. (FH), W-8887 Bachhagel (DE); Rosenbauer, Michael, Dipl.-Ing. (FH), W-8860 Nördlingen (DE)

(56) Entgegenhaltungen:
- EP-A- 0 089 567
- DE-A- 3 016 941
- DE-A- 3 430 946
- US-A- 4 545 505

## Beschreibung

Die Erfindung betrifft eine Anordnung, insbesondere für einen Getränkeautomaten, mit einem zur Vorratshaltung, Kühlung und Karbonisierung von Wasser dienenden, eine Zufluß- und eine Abflußleitung aufweisenden Behälter mit elektrisch leitfähiger Innenwandung, in welchem das Wasser mit einem im Bereich der Seitenwandung angeordnetem Wärmetauscher eines Kälteaggregats im Behälterwandungsbereich einen Eismantel bildend gekühlt wird, und mit einer Auswerteschaltungsanordnung, die eine erste Meßelektrode enthält, zwischen der und der Behälterinnenwandung in Abhängigkeit der Eismanteldicke ein veränderbarer ohmscher Widerstand besteht, und die in Abhängigkeit des veränderbaren Widerstandes das Kälteaggregat ein- bzw. ausschaltet.

Aus der DE-A- 30 16 941 ist bereits ein Getränkeautomat mit einem zur Vorratshaltung, Kühlung und Karbonisierung von Trinkwasser dienenden Behälter bekannt, in welchem das Trinkwasser durch ein Kälteaggregat bis zum Gefrierpunkt gekühlt wird. Dem Kälteaggregat ist eine Auswerteschaltung mit zwei Meßelektroden vorgeschaltet, die im Behälter angeordnet sind und den sich bildenden Eisansatz überwachen. Die von den Meßelektroden abgegriffenen Meßwerte werden mit einem vorgegebenen Referenzwert verglichen und in Abhängigkeit von einem Vergleich der Werte wird das Kälteaggregat ein- oder ausgeschaltet.

Aus der DE-A- 34 30 946 ist bereits eine Schaltungsanordnung zum Steuern von Kühlkreisläufen für zumindest zwei Kühlbereiche bekannt. Dabei sind drei Sensoren zumindestens einem der Kühlbereiche für zumindest zwei Kältebedarfskriterien und zumindestens einem weiteren Kühlbereich für zumindest ein Kältebedarfskriterium zugeordnet. Zwei Sensoren sind in einem mit Wasser gefüllten Behälter im Bereich des sich ausbildenden Eismantels in unterschiedlichen Abständen von der Kühlreinrichtung angeordnet.
Auch bei dieser bekannten Schaltungsanordnung werden die von den Sensoren abgegriffenen Meßwerte mit je einem vorgegebenen festen Referenzwert verglichen und in Abhängigkeit von einem Vergleich der variablen Meßwerte und des jeweils festen Referenzwerts wird das Kälteaggregat ein- oder ausgeschaltet.
Die Steuerung des Kälteaggregats und die resultierende Änderung der Eismanteldicke erfolgt dabei aber abhängig von der chemischphysikalischen Zusammensetzung des Wassers, der jeweils ein bestimmter spezifischer ohmscher Widerstand entspricht. Die chemisch-physikalische Zusammensetzung des Wassers und die zugehörigen spezifischen Widerstandswerte können sich je nach lokalen Verhältnissen und einer möglichen Vorbehandlung des Wassers erheblich unterscheiden. Ermittelte Werte des spezifischen ohmschen Widerstandes umfassen den Bereich von 210 Ω/cm bis 11 kΩ/cm.
Aufgrund dieser unterschiedlichen Wasserbeschaffenheit können sich bei den bekannten Anordnungen die Schaltpunkte für das Kälteaggregat je nach verwendetem Wasser und vorgegebenem Referenzwert stark unterscheiden. Als Folge bildet das Kälteaggregat Eismengen, die von einem vorgesehenen Sollwert abweichen.

Im Hinblick auf diesen Sachverhalt ist es Aufgabe der vorliegenden Erfindung, eine Anordnung der eingangs genannten Art bereitzustellen, die einen Eisvorrat in dem zu kühlenden Wasser unabhängig von dessen chemisch-physikalischer Zusammensetzung bildet.

Eine Anordnung, welche dieser Anforderung genügt, ist erfindungsgemäß dadurch gekennzeichnet, daß im Behälter eine zweite mit der Auswerteschaltungsanordnung verbundene Meßelektrode in einem bezüglich der ersten Meßelektrode grösseren horizontalen Abstand zur Behälterinnenwandung angeordnet ist, welche einen veränderbaren Referenzwiderstandswert für den Schaltpunkt des Kälteaggregats liefert, daß der vertikale Abstand der ersten Meßelektrode zum Behälterboden geringer ist als der entsprechende vertikale Abstand der zweiten Meßelektrode, daß die Auswerteschaltungsanordnung das nachgeschaltete Kälteaggregat einschaltet, sofern der von der ersten Meßelektrode abgegriffene ohmsche Widerstand kleiner ist als der von der zweiten Meßelektrode abgegriffene ohmsche Widerstand und daß die Auswerteschaltungsanordnung bei sich umgekehrendem Verhältnis der beiden Widerstandswerte das Kälteaggregat ausschaltet.

Die Erfindung zeichnet sich durch mehrere Vorteile aus. Die Anordnung ist unabhängig von lokalen Wasserqualitäten universell einsetzbar. Dabei erübrigt es sich, die chemisch-physikalische Zusammensetzung des jeweiligen Wasser zu analysieren und der jeweiligen Wasserbeschaffenheit entsprechende Referenzwerte in die Anordnung einzugeben. Auch erübrigt es sich, die Anordnung mit einem eingestellten Referenzwert einem oder gar mehreren Probebetriebsläufen zu unterziehen.

Eine besonders einfache schaltungstechnische Ausgestaltung der erfindungsgemäßen Anordnung ist dadurch gekennzeichnet, daß der von der ersten Meßelektrode abgegriffene Widerstand mit einem weiteren Widerstand eine erste Widerstandsbrückenschaltung bildet, daß der von der zweiten Meßelektrode abgegriffene Referenzwiderstand Teil einer weiteren Widerstandsbrückenschaltung bildet und daß die Mittelabgriffe beider Widerstandsbrückenschaltungen mit den Eingängen eines ersten Differenzverstärkers verbunden sind. Dabei sind vorteilhafterweise die Meßstrecken zwischen der ersten bzw. zweiten Meßelektrode zur Innenwandung des Behälters mit höherfrequentem Wechselstrom beaufschlagt.

Der Wechselstrom wird über einen ersten bzw. zweiten Kondensator den Meßelektroden zugeführt und für die Auswertung gleichgerichtet.
Insbesondere weist der erste Kondensator einen gegenüber dem zweiten Kondensator geringeren Kapazitätswert auf, beispielsweise beträgt das Verhältnis der Kapazitätswerte des ersten und zweiten Kondensators etwa 1/3. Eine solche Dimensionierung führt zu einer signifikanten Differenz der an beiden Kondensatoren gebildeten Potentiale, die den von beiden Meßelektroden abgegriffenen Widerstandswerten entsprechen und dem ersten Differenzverstärker zum Zwecke eines Vergleichs beider Potentialwerte zugeführt werden. Damit wird der vom Differenzverstärker durchzuführende Vergleich weniger störungsanfällig. Es können relativ preisgünstige Differenzverstärker verwendet werden, die geringeren Toleranzanforderungen genügen.

Nach einer weiteren vorteilhaften Ausführungsform der erfindungsgemäßen Anordnung ist die zweite Meßelektrode mit einem ersten Eingang eines zweiten Differenzverstärker verbunden, an dessen zweitem Eingang ein einem Behältersollwasserstand entsprechendes Bezugspotential anliegt. Der zweite Differenzverstärker schaltet ausgangsseitig ein in der Zuflußleitung des Behälters angeordnetes, elektrisch betätigbares Ventil.
Damit übernimmt die zweite Meßelektrode neben der Bereitstellung eines Referenzwertes für das Kühlbedarfskriterium die weitere Funktion eines Wasserstandsensors.

Eine weitere vorteilhafte Ausführungsform entprellt die Ausgangssignale des ersten Differenzverstärkers. Damit wird die Schalthäufigkeit für die Steuerung des Kälteaggregats verringert. Das Kälteaggregat wird nach einer weiteren Ausführungsform in der jeweiligen Schaltstellung belassen, wenn der Wasserpegel im Behälter unter die zweite Meßelektrode sinkt.

Auch hierdurch wird vorteilhafterweise die Schalthäufigkeit für die Steuerung des Kälteaggregats verringert.

Nach den Merkmalen der Erfindung ausgestaltete Ausführungsbeispiele sind anhand der Zeichnungen im folgenden näher beschrieben. Es zeigen:
- Fig. 1: den prinzipiellen Aufbau der Anordnung mit einer schematisierten Auswerteschaltungsanordnung;
- Fig. 2: die Anordnung nach Figur 1 mit einer einen Taktgenerator aufweisenden Auswerteschaltungsanordnung;
- Fig. 3: die Anordnung nach Figur 1 mit einer Entprellungsschaltung;
- Fig. 4: die Anordnung nach Figur 1 mit einer wasserstandsgesteuerten Entprellungsschaltung;
- Fig. 5: die Anordnung nach Figur 1 mit einer Kombination der Schaltungen nach Figur 3 und 4; und
- Fig. 6: die Anordnung nach Figur 1 mit einer Kombination der Schaltungen nach den Figuren 2 bis 5.

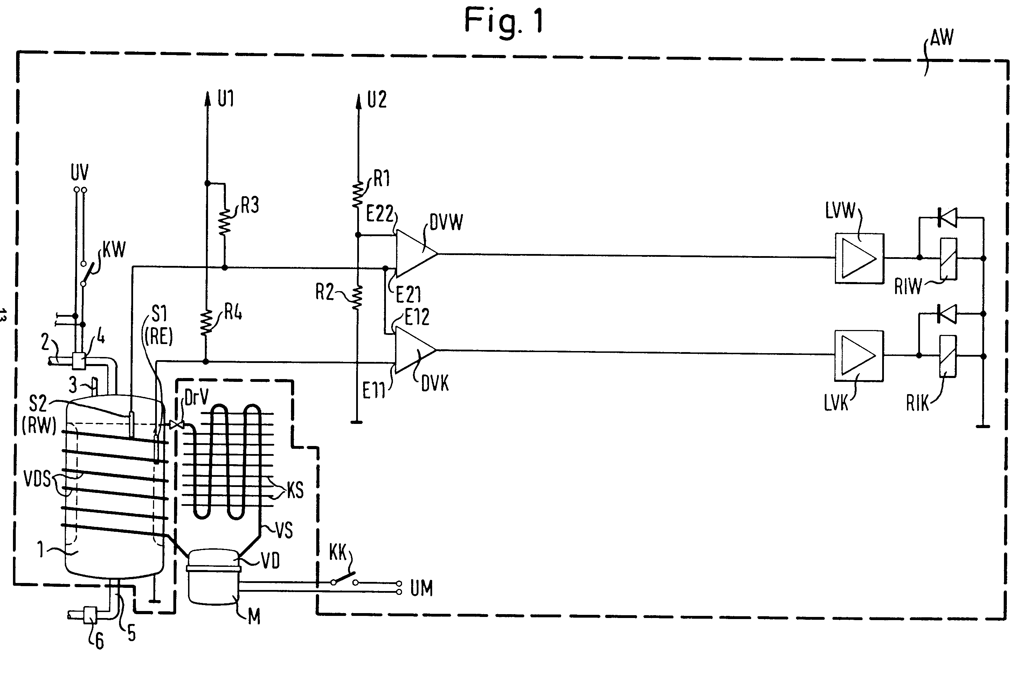

Die in Figur 1 dargestellte Anordnung, die insbesondere für einen Getränkeautomaten eingesetzt wird, weist einen in der Figur links unten dargestellten Behälter 1 auf. Er dient zur Vorratshaltung, Kühlung und Karbonisierung von Wasser und weist in seinem oberen Bereich ein Wasserzuflußleitungsrohr 2 für die Zufuhr von Wasser sowie eine Rohrleitung 3 für die Zufuhr von CO2-Gas auf. In dem Wasserzuflußleitungsrohr 2 ist ein über einen elektrischen Schalter KW betätigbares Ventil 4 angeordnet. Der Schalter KW wird durch ein Relais RIW gesteuert.

In seinem unteren Bereich weist der Behälter 1 ein Abflußleitungsrohr 5 für die Ausgabe von gekühltem CO2-Wasser auf. In dem Abflußleitungsrohr 5 ist ein Ausgabeventil 6 angeordnet.
Der Kühlkreislauf für das im Behälter 1 zu kühlende CO2-Wasser besteht im wesentlichen aus einem durch einen Motor M angetriebenen Kältemittel-Verdichter VD, einer Verflüssigerstrecke VS, einer Verdampferstrecke VDS (Wärmetauscher) und einem Drosselventil DrV gebildet.
Der Motor M des Verdichters ist mittels eines Schalters KK ein- bzw. ausschaltbar. Der Schalter KK ist durch ein Relais RIK gesteuert.
Die Verdampferstrecke VDS besteht aus einer Rohrleitung, die um den Behälter 1 gewickelt ist und ein Kältemittel enthält, das den CO2-Wasservorrat im Behälter 1 insbesondere auf eine Temperatur im Bereich nahe und oberhalb des Gefrierpunktes kühlt. Zur Erhöhung der Kältekapazität wird ein Teil des karbonisierten Wassers in Eisform bevorratet. Der sich unter dem Einfluß der Verdampferstrecke VDS bildende Eismantel, der in der Figur 1 an den vertikalen Seitenwandungen des Behälters 1 gestrichelt gezeichnet ist, wird als Kriterium für die Kälteversorgung ausgewertet.

Der Behälter 1 weist eine elektrisch leitfähige Innenwandung auf, die an Masse gelegt ist. Im Behälter 1 sind zwei Meßelektroden S1 und S2 in unterschiedlichen horizontalen Abständen von der Behälterinnenwandung angeordnet. Die erste Meßelektrode S1 befindet sich im Bereich des sich bildenden Eismantels relativ nahe an der Innenwandung, zum Beispiel 10 mm, während die zweite Meßelektrode S2 in einem gegenüber der Elektrode S1 grösseren Abstand, zum Beispiel 26 mm, von der Innenwandung angeordnet ist. Beide Elektroden S1 und S2 sind zudem in unterschiedlichen vertikalen Abständen von dem Behälterboden angeordnet. Dieser vertikale, jeweils auf den Behälterboden bezogene Abstand der Elektrode S1 ist geringer als der vertikale Abstand der Elektrode S2. Die Abstände betragen zum Beispiel 74 bzw. 90 mm.

Jede Elektrode S1, S2 greift den ohmschen Widerstand ab, der sich zwischen der jeweiligen Elektrode und dem nächstgelegenen Punkt der Behälterinnenwandung(kein Eis) - bzw. wie noch erläutert wird - bei entsprechender Ausbildung des Eismantels zwischen der jeweiligen Elektrode und der Bodenpartie der Behälterinnenwandung ausbildet. Im folgenden wird der von der Elektrode S1 abgegriffene Widerstand mit RE und der von der Elektrode S2 abgegriffene Widerstand mit RW bezeichnet.

Die Elektroden S1 und S2 und die von ihnen gemessenen Widerstände RE und RW sind Teil einer Auswerteschaltungsanordnung AW, deren unterschiedliche Ausgestaltungen in den Figuren 1 bis 6 dargestellt sind.

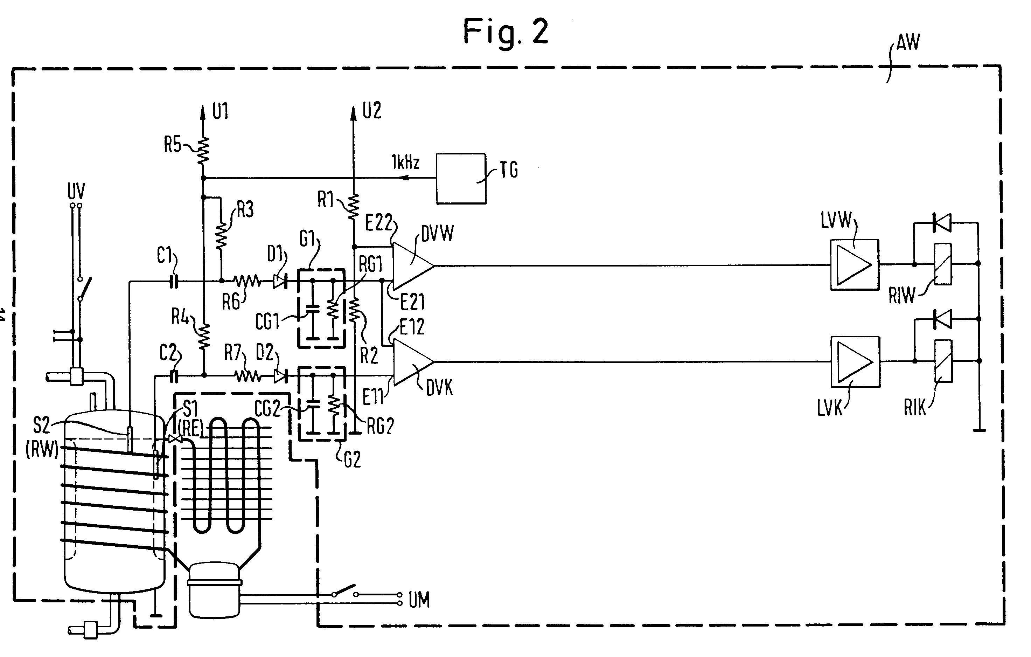

Die Auswerteschaltung weist insbesondere einen ersten Differenzverstärker DVK mit zwei Eingängen E11 und E12 auf. Dem Eingang E11 wird das Potential zugeführt, das sich zwischen dem von der Elektrode S1 ist (gegebenenfalls über einen Gleichrichter D2 und/oder einen Widerstand R7 und/oder einen Kondensator C2, vgl. Figur 2) mit dem Mittenabgriff einer Widerstandsbrückenschaltung verbunden, die aus dem gegenüber Masse (Behälterinnenwandung) abgegriffenen Widerstand RE und einem in Reihe geschalteten Widerstand R4 besteht, der mit einer ersten Spannungsquelle U1 verbunden ist.

Der Eingang E12 ist (gegebenenfalls über einen Gleichrichter D1 und/oder einen Widerstand R6 und/oder einen Kondensator C1, vgl. Figur 2) mit dem Mittenabgriff einer weiteren Widerstandsbrückenschaltung verbunden, die aus dem gegenüber Masse (Behälterinnenwandung) abgegriffenen Widerstand RW und einem in Reihe geschalteten Widerstand R3 besteht, der mit einer zweiten Spannungsquelle U2 verbunden ist. Dem Eingang E12 wird also das Potential zugeführt, das sich am Verbindungspunkt des von der Elektrode S1 gegenüber Masse abgegriffenen Widerstands RW und des Widerstands R4 ausbildet.

Der erste Differenzverstärker DVK ist in der Weise schaltungstechnisch ausgebildet, daß er an seinem Ausgang ein Signal "1" abgibt, sofern das Potential am seinem Eingang E11 kleiner als das Potential an seinem Eingang E12 ist (RE < RW). Ist dagegen das Potential am Eingang E11 gleich oder größer als das Potential am Eingang E12 (RE ≧ RW), gibt der Differenzverstärker DKV das Signal "0" ab. Das Ausgangssignal "0" bzw. "1" wirkt, beispielsweise über einen Leistungsverstärker LVK und das Relais RIK auf den Schalter KK in der Weise, daß das Signal "1" den Schalter KK schließt, damit dem Motor M des Verdichters VD die Spannung UM zuführt, also das Kälteaggregat aktiviert, während das Signal "0" den Schalter KK öffnet, also das Kälteaggregat deaktiviert.

Dem ersten Differenzverstärker DVK wird also sowohl ein Potential zugeführt, das von dem von der ersten Elektrode S1 abgegriffenen Widerstandswert RE abgeleitet ist, als auch ein Potential, das von dem von der zweiten Elektrode S2 abgegriffenen Widerstandswert RW abgeleitet ist. Beide Potentiale sind eine Funktion der variablen Widerstände RE bzw. RW, die ihrerseites jeweils für sich neben der Geometrie der betreffenden Meßstrecken von der chemischphyikalischen Zusammensetzung des Eises bzw. des Wassers abhängen. Sie sind zudem eine Funktion des sich an der Behälterinnenwandung bildenden Eismantels.

Es wird zunächst davon ausgegangen, daß der Behälter 1 so mit Wasser gefüllt ist, daß beide Elektroden S1 und S2 in das Wasser eintauchen (gestrichelte, horizontale Linie im Behälter 1, vgl. Figur 1), wobei sich noch kein Eis gebildet hat. Der Schalter KK ist geöffnet, so daß der Motor M des Verdichters VD ruht.
Das Wasser im Behälter 1 bildet eine unendliche Anzahl von parallel geschalteten Widerständen zwischen der jeweiligen Elektrode und der an Masse gelegten, elektrischen Innenwandung des Behälters 1. Der dominierende Widerstand einer Parallelschaltung aus mehreren Widerständen ist bekanntlich der kleinste dieser Widerstände. Im vorliegenden Fall bildet also die horizontale Strecke zwischen der jeweiligen Elektrode und der Innenwandung des Behälters 1 den dominierenden Widerstand. Aufgrund der näheren Anordnung zur Behälterwand ist der von der Elektrode S1 abgegriffene Widerstand RE kleiner als der von der Elektrode S2 abgegriffene Widerstand RW. Unter der weiteren Voraussetzung, daß die beiden an U1 liegenden Widerstände R3 und R4 gleichgroß sind, stellt sich am Eingang E11 ein kleineres Potential als am Eingang E12 des Differenzverstärkers DKV ein. Dieser gibt das Ausgangssignal "1" ab und löst damit das Schließen des Schalters KK und den Betrieb des Motors M aus mit der Folge, daß sich an den vertikalen Wandungen des Behälters 1 Eis bildet.

Eis hat einen höheren spezifischen elektrischen Widerstand als Wasser. In dem Zeitraum, in dem der sich vertikal in etwa gleichmäßig ausbildende Eismantel die der Behälterinnenwandung nähergelegene und tiefer angeordnete erste Elektrode S1 noch nicht erreicht hat, greift diese weiterhin einen Widerstand RE ab, der aufgrund der unterschiedlichen vertikalen Abstände beider Elektroden von der Bodenpartie der Behälterinnenwandung kleiner als RW ist. Der Differenzverstärker DVK gibt weiterhin das Ausgangssignal "1" ab, so daß der Schalter KK geschlossen bleibt, der Motor M des Verdichters VD weiterläuft und sich der Eismantel verstärkt.
Dieser Vorgang setzt sich fort, bis der Eismantel die Elektrode S1 umhüllt, während die Elektrode S2 eisfrei bleibt. Der Widerstand RE hat nun einen höheren Wert als RW mit der Folge, daß sich die Potentiale an den Eingängen E11 und E12 des Differenzverstärkers DVK entsprechend umkehren. Das Potential an E11 ist dann größer als das Potential an E12; DKV gibt das Ausgangssignal "0" ab mit der Folge, daß der Schalter KK geöffnet und der Motor M des Verdichters VD deaktiviert wird.
Das Anwachsen des Eismantels wird damit gestoppt. Dieser wird je nach Außentemperatur, Wärmeisolationswert des Behälters 1, Menge und Temperatur möglicherweise zugeführten Frischwassers abschmelzen und damit das Widerstandsverhältnis von RE und RW wiederum umkehren mit der Folge einer erneuten Aktivierung des Kälteaggregats.

Die in Figur 1 dargestellte Auswerteschaltung AW enthält einen zweiten Differenzverstärker DVW mit zwei Eingängen E21 und E22.

Der Eingang E21 des Differenzverstärkers DVW ist mit dem Eingang E12 des Differenzverstärkers DVK verbunden, so daß also auch dem Eingang E21 das Potential zugeführt wird, das sich zwischen dem gegenüber Masse von der zweiten Elektrode S2 abgegriffenen Widerstand RW und dem mit der Spannungsquelle U1 verbundenen Widerstand R3 einstellt.

Der Eingang E22 ist mit dem Mittenabgriff einer weiteren Widerstandsbrückenschaltung verbunden, die aus einem an Masse gelegten Widerstand R2 und einem in Reihe geschalteten Widerstand R1 besteht, der mit der zweiten Spannungsquelle U2 verbunden ist. Dem Eingang E22 wird also ein festes Bezugspotential zugeführt, das sich am Verbindungspunkt der Widerstände R2 und R1 ausbildet. Vorzugsweise ist U1 = U2, R1 = R2 und R3 = R4. Die Widerstände R1 und R3 können auch variable Widerstände sein, um die Schwellwerte der beiden Differenzverstärker DVW und DVK veränderbar auszugestalten.

Der zweite Differenzverstärker DVW kann schaltungstechnisch in gleicher Weise wie der erste Differenzverstärker DVK aufgebaut sein. Der von der Elektrode S2 abgegriffene Widerstand RW nimmt, sofern das Wasser im Behälter die Elektrode S2 mindestens teilweise überdeckt, je nach der Dicke des Eismantels verschiedene endliche Werte ein; sinkt dagegen der Wasserspiegel im Behälter unter die Elektrode S2, ergibt sich für RW der Wert unendlich. Am Eingang E21 stellt sich das Potential U1 ein, das voraussetzungsgemäß bei entsprechender Dimensionierung von U2 (z.B. U2 = U1), R1 und R2 (z.B. R1 = R2) größer als das Bezugspotential am Eingang E22 ist.

Der Differenzverstärker DVW gibt (insbesondere oder nur) für diesen Fall ein Ausgangssignal "1" ab, das insbesondere über einen nachgeschalteten Leistungsverstärker LVW und ein Relais RIW auf den Schalter KW wirkt, diesen schließt und damit im Wasserzuflußleitungsrohr 2 das Ventil 4 öffnet und so die Zufuhr von Frischwasser in den Behälter 1 freigibt. Andernfalls, das heißt für endliche Widerstandswerte RW, gibt der Differenzverstärker DVW ein Ausgangssignal "0" ab; der Schalter KW bleibt bzw. wird geöffnet und das Ventil 4 geschlossen.

Bei der in Figur 2 dargestellten Auswerteschaltungsanordnung AW sind die Meßstrecken RE, RW zwischen der ersten bzw. zweiten Meßelektrode S1, S2 und der Behälterinnenwandung mit höherfrequentem Wechselstrom beaufschlagt. Der Wechselstrom wird über einen ersten bzw. zweiten Kondensator C1, C2 den Meßelektroden S1, S2 zugeführt und für die Auswertung durch die Differenzverstärker DVK, DVW gleichgerichtet (Dioden D1, D2).
Die dargestellte Auswerteschaltung AW weist demgemäß einen, insbesondere eine Taktfrequenz von 1 kHz erzeugenden Taktgenerator TG auf, der die Meßstrecken(Widerstände RE und RW) zwischen der ersten bzw. zweiten Meßelektrode S1, S2 und der an Masse gelegten Innenwandung des Behälters 1 mit Wechselstrom beaufschlagt.

Der Taktgenerator TG ist über einen Widerstand R5 mit der ersten Spannungsquelle U1 und jeweils über die Serienschaltung aus dem Widerstand R3 bzw. dem Widerstand R4 und dem ersten bzw. zweiten Kondensator C1, C2 mit der zweiten und ersten Meßelektrode S2, S1 verbunden. Das Potential zwischen R3 bzw. R4 und dem ersten bzw. zweiten Kondensator C1, C2 wird über je einen Widerstand R6 bzw. R7 und je einen insbesondere baugleichen Gleichrichter D1, D2 den Eingängen E12 und E11 des ersten Differenzverstärkers DVK zugeführt. Die den Eingängen E12 und E11 zugeführten Potentiale werden über je eine an Masse gelegte, aus je einem Kondensator CG1, CG2 und einen dazu parallelgeschalteten Widerstand RG1, RG2 gebildete Glättungsschaltungsanordnung G1, G2 geglättet.

Der Eingang E12 des ersten Differenzverstärkers DVK ist wie bei der Anordnung nach Figur 1 mit dem Eingang E21 des zweiten Differenzverstärkers DVW verbunden, so daß beiden Eingängen E12 und E21 das gleiche Potential zugeführt wird.

Der erste Kondensator C1 weist vorzugsweise einen gegenüber dem zweiten Kondensator C2 geringeren Kapazitätswert auf. Das Verhältnis C1:C2 beträgt bei den oben angegebenen Abständen der Elektroden S1, S2 von der Behälterinnenwandung ca. 1:3.

C1 hat damit einen ca dreifach grösseren Wechselstromwiderstand als C2.
Diese Dimensionierung der Kondensatoren C1 und C2 vergrößert die Potentialdifferenz an den Verbindungspunkten von C1 und R6 gegenüber C2 und R7 und damit an den Eingängen E12 und E11 des Differenzverstärkers DVK und ist einer Vergrößerung der Abstände der Elektroden S2 und S1 von der Behälterinnenwand äquivalent. Einer an sich erwünschten tatsächlichen Vergrößerung dieser horizontalen Abstände der Elektroden von der Behälterinnenwand stünde zunächst entgegen, daß die Elektrode S2 als maximalen Abstand den halben Durchmesser des Behälters 1 einnehmen kann. Der Abstand der Elektrode S1 von der Behälterinnenwand ist dagegen durch die gewünschte maximale Dicke des sich ausbildenden Eismantels vorgegeben.
Die Vergrößerung der Potentialdifferenz an E12 und E11 verbessert die Auswertegenauigkeit des Differenzverstärkers DVK, der somit eine weniger toleranzabhängige Schaltcharakteristik erhält.

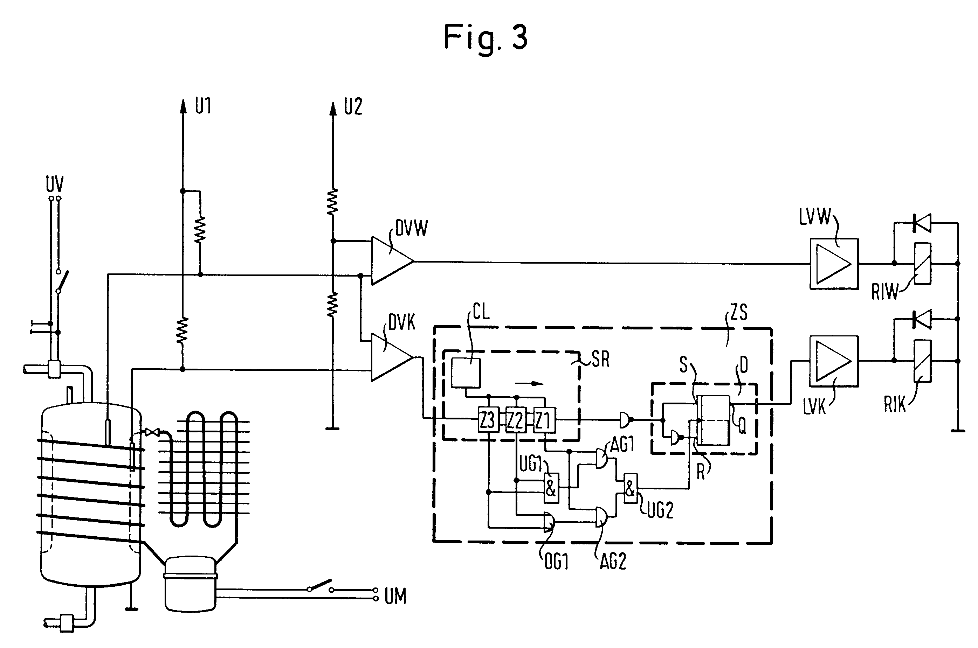

Figur 3 zeigt die Auswerteschaltungsanordnung nach Figur 1, wobei dem ersten Differenzverstärker DVK eine Zeitsteuerungsschaltung ZS nachgeschaltet ist. Die Schaltung ZS ist in Figur 3 als Beispiel für eine Schaltung dargestellt, die die folgende Funktion ausübt: die Auswerteschaltung AW, die von den Meßelektroden S1, S2 abgegriffenen Widerstandswerte RE, RW mittels des Taktgenerators TG zyklisch abfragt, bildet mittels des ersten Differenzverstärkers DVK zu jedem Abfragezeitpunkt bezüglich eines Bezugswiderstandes (z.B. RE) das Verhältnis (RW/RE) der beiden Widerstände (RW, RE) beziehungsweise das Verhältnis der entsprechenden, von RW und RE abhängigen Potentiale (Eingänge E12 und E11 des Differenzverstärkers DVK) und überprüft diese Verhältniswerte auf Werte von "größer/gleich 1" und "kleiner 1". Die Auswerteschaltung AW vergleicht mindestens jeweils drei aufeinanderfolgende Werte dieser Widerstands- bzw. Potentialverhältnisse miteinander. In Abhängigkeit von den Vergleichsergebnissen schaltet die Auswerteschaltung das Kälteaggregat (Motor M des Kältemittel-Verdichters VD) nur dann um, wenn sowohl der zeitlich zweite und der zeitlich dritte Verhältniswert gleich sind alsauch dieser (zeitlich dritte = zeitlich zweite) Verhältniswert ungleich dem zeitlich ersten Verhältniswert ist.
Soweit mehr als drei Verhältniswerte gebildet werden, haben der zweite und jeder folgende Verhältniswert zueinander gleich und ungleich gegenüber dem ersten Verhältniswert zu sein.
Durch diese Maßnahmen werden die Ausgangssignale des Differenzverstärkers DVK entprellt; die Abfrage der Widerstandswerte RW, RE bzw. der entsprechenden Potentiale und der Vergleich durch den Differenzverstärker DVK werden störungsunabhängiger und damit sicherer ausgewertet.
Als Entprellungsschaltung kann beispielsweise die in Figur 3 schematisch dargestellte, zwischen Differenzverstärker DVK und Leistungsverstärker LVK bzw. Relais RIK und Schalter KK angeordnete Schaltungsanordnung ZS verwendet werden.
Diese umfaßt ein Schieberegister SR mit drei Speicherzellen Z1, Z2 und Z3, die beispielsweise durch Flipflops, insbesondere durch D-Flipflops gebildet werden.
Die Zellen Z1, Z2 und Z3 nehmen drei zeitlich aufeinanderfolgende Werte des Ausgangssignals des Differenzverstärkers DVK auf. Zelle Z1 nimmt ein Ausgangssignal At1 (Zeit t1), Zelle Z2 ein Ausgangssignal At2 (Zeit t2) und Zelle Z3 ein Ausgangssignal At3 (Zeit t3) auf.
Jede der Zellen weist einen Setzeingang auf, der mit einem Taktgenerator CL verbunden ist. Die vom Taktgenerator CL erzeugte Taktfrequenz bestimmt die Abfragezeitpunkte t1, t2 und t3.
Zelle Z3 ist eingangsseitig mit dem Ausgang des Differenzverstärkers DVK und ausgangsseitig mit Zelle Z2 verbunden, die ihrerseits mit Zelle Z1 verbunden ist. Das Schieben der gespeicherten Information Atx erfolgt von links nach rechts.

Die Zellen Z2 und Z3 sind außerdem mit einem Und-Gatter UG1 und einem Oder-Gatter OG1 verbunden. Am Ausgang des Gatters UG1 erscheint nur dann eine "1", wenn die Inhalte beider Speicherzellen Z2 und Z3 jeweils gleich "1" sind; am Ausgang des Oder-Gatters OG1 erscheint nur dann eine "0", wenn die Inhalte beider Speicherzellen Z2 und Z3 jeweils gleich "0" sind.

Die Speicherzelle Z1 ist mit einem Antivalenz-Gatter (= Exklusiv-Oder-Gatter) AG1 und mit einem Antivalenz-Gatter AG 2 verbunden. Das Gatter AG1 ist eingangsseitig ferner mit dem Ausgang des Und-Gatters UG1 verbunden und das Gatter AG2 ist eingangsseitig ferner mit dem Ausgang des Oder-Gatters OG1 verbunden.
Damit ergibt sich am Ausgang des Antivalenz-Gatters AG1 für die folgenden drei Kombinationen der Eingangsvariablen At3, At2, At1 (in Z3,Z2,Z1) eine "1": "0","0","1"; "0","1","1" und "1","1","0". Nur bei der ersten und dritten dieser Kombinationen soll das Kälteaggregat M umgeschaltet werden, da hier die oben genannte Bedingung gilt, daß der zeitlich zweite und zeitlich dritte Wert des Ausgangssignals des Verstärkers DVK gleich sind (At2 in Z2 = At3 in Z3), dieser Wert aber ungleich dem zeitlich ersten Wert (At1 in Z1) ist.

Am Ausgang des Antivalenz-Gatters AG2 ergibt sich für die folgenden vier Kombinationen der Eingangsvariablen At3,At2,At1 (in Z3,Z2,Z1) eine "1": "0", "0","1"; "0","1","0"; "1","0","0" und "1","1","0". Nur bei der ersten und vierten dieser Kombinationen soll das Kälteaggregat M umgeschaltet werden, da wiederum hier die oben genannte Bedingung gilt, daß der zeitlich zweite und zeitlich dritte Wert des Ausgangssignals des Verstärkers DVK gleich sind (At2 in Z2 = At3 in Z3), dieser Wert aber ungleich dem zeitlich ersten Wert (At1 in Z1) ist.

Ein Vergleich der beiden Gruppen von Kombinationen, bei denen sich am Ausgang des Gatters AG1 bzw. am Ausgangs des Gatters AG2 eine "1" ergibt, zeigt, daß die erste Kombination "0","0","1"aus der ersten Gruppe gleich der ersten Kombination aus der zweiten Gruppe ist und daß die dritte Kombination "1","1","0" der ersten Gruppe gleich der vierten Kombination aus der zweiten Gruppe ist. Diese beiden Kombinationen für At3,At2, At1 (in Z3,Z2,Z1) gleich "0","0","1" und "1","1","0" sind diejenigen Kombinationen, bei denen die oben genannte Bedingung hinsichtlich der Gleichheit von At3 (in Z3) und At2 (in Z2) und der Ungleichheit von At3 (in Z3) = At2 (in Z2) # At1 (in Z1) gilt und damit das Kälteaggregat M umgeschaltet werden soll.

Die Ausgänge der Antivalenz-Gatter AG1 und AG2 führen daher auf ein Und-Gatter UG2, an dessen Ausgang immer dann eine "1" erscheint, wenn das Kälteaggregat M umzuschalten ist. Der Ausgang des Und-Gatters UG2 führt daher auf den Takteingang eines D-Flipflops, also eines SR-Flipflops, bei dem der R-Eingang über eine Umkehrstufe gemeinsam mit dem S-Eingang angesteuert wird. Der S-Eingang des hier verwendeten D-Flipflops ist über eine Umkehrstufe mit der Zelle Z1 verbunden, die jeweils den Wert At1 aufnimmt. Beim Eintreffen eines vom Ausgang des Und-Gatters UG2 abgegebenen Taktimpulses "1" am Takteingang des D-Flipflops wird somit der negierte Wert (A̅t̅1̅) der ursprünglich in Z1 enthaltenen Information (At1), die am S-Eingang des D-Flipflops anliegt, in den Speicher gesetzt und an den Q-Ausgang durchgeschaltet. Am Q-Ausgang des D-Flipflops ergibt sich also folgendes:
Bei der Eingangskombination At3,At2,At1 (in Z3,Z2,Z1) gleich "0,"0","1" liegt am S-Eingang eine "0" an. Vom Ausgang des Und-Gatters UG2 wird dem Takteingang wie bereits beschrieben eine "1" zugeführt. Durch den Taktimpuls wird die "0" vom S-Eingang an den Q-Ausgang des D-Flipflops durchgeschaltet. Das Kälteaggregat M wird ausgeschaltet.
Diese Ausschaltung erfolgt - abgesehen von den internen Schaltzeiten im Schieberegister SR, den Gattern und dem D-Flipflop - verzögert um einen durch die Frequenz des Taktgenerators CL vorgegebenen Abfragezeitraum.

Bei der Eingangskombination At3,At2,At1 (in Z3,Z2,Z1) gleich "1,"1","0" liegt am S-Eingang eine "1" an. Vom Ausgang des Und-Gatters UG2 wird dem Takteingang wie bereits beschrieben eine "1" zugeführt. Durch den Taktimpuls wird die "1" vom S-Eingang an den Q-Ausgang des D-Flipflops durchgeschaltet. Das Kälteaggregat M wird eingeschaltet.

Diese Einschaltung erfolgt - abgesehen von den vorgenannten internen Schaltzeiten im Schieberegister SR, den Gattern und dem D-Flipflop - verzögert um einen durch die Frequenz des Taktgenerators CL vorgegebenen Abfragezeitraum.
Die Zeiträume, in denen das Kälteaggregat M ein- oder ausgeschaltet ist, werden durch die beschriebene logische Verknüpfungsschaltung (Schieberegister, Gatter, D-Flipflop) gegenüber der Ausgestaltung der Auswerteschaltung AW nach Figur 2 verlängert.

Die Abfragezeiträume lassen sich durch entsprechende Änderungen der vom Taktgenerator CL abgegebenen Taktfrequenz variieren. Weiterhin kann ein Schieberegister SR verwendet werden, das mehr als drei Zellen umfaßt. Auch lassen sich weitere, an sich bekannte Entprellungsschaltungen verwenden. Hierzu gehört zum Beispiel ein von dem Differenzverstärker DVK über eine logische Verknüpfungsschaltung angesteuerter Binärzähler. Die logische Verknüpfungsschaltung erhöht den Zählerstand jeweils um eine Zähleinheit, wenn der Differenzverstärker DVK ein Ausgangssignal "1" abgibt, und sie setzt den Zählerstand auf die Zählerstellung 0 zurück, wenn der Differenzverstärker DVK ein Ausgangssignal "0" abgibt. Erst wenn der Binärzähler einen vorgegebenen Zählerstand, zum Beispiel "11", erreicht, gibt er ein Signal ab, das zum Umschalten des Kälteaggregats M führt.

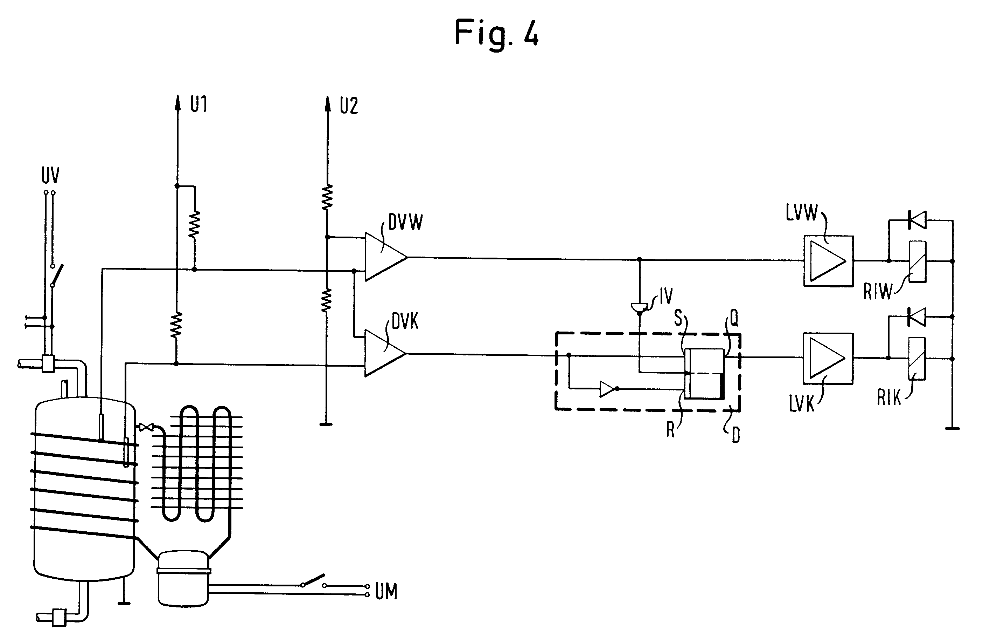

Figur 4 zeigt ein Beispiel einer Auswerteschaltung AW, bei der ein vom Pegel des Wasserstands im Behälter 1 abgeleitetes Signal nicht nur den Zufluß des Frischwassers (über LVW, RIW, KW, Ventil 4, vgl. Figur 1) steuert, sondern auch die Umschaltung des Kälteaggregats M beeinflußt.
Die Auswerteschaltung AW ist dann in der Weise ausgestaltet, daß sie das Kälteaggregat M bei Auftreten eines unendlichen Wertes des von der zweiten Meßelektrode S2 abgegriffenen Widerstandes RW nicht umschaltet.
Bei einer solchen Ausgestaltung der Auswerteschaltung AW kann der Ausgang des ersten Differenzverstärkers DVK auf den Vorbereitungseingang S eines D-Flipflops führen. Dieses besteht prinzipiell aus einem SR-Flipflop, bei dem der Eingang R über einen Inverter gemeinsam mit dem Eingang S angesteuert wird. Der Takteingang des D-Fliflops ist mit dem Ausgang des zweiten Differenzverstärkers DVW über einen Inverter IV verbunden.

Der zweite Differenzverstärker DVW erzeugt, wie oben anhand von Figur 1 beschrieben, immer dann ein Ausgangssignal "1", wenn der Wasserspiegel im Behälter 1 unter die Elektrode S2 absinkt (RW gleich unendlich).

Die an dem Eingang S anliegende Information, also das Ausgangssignal "0" oder "1" des ersten Differenzverstärkers DVK, wird, wenn dem Takteingang ein Taktimpuls "1" zugeführt wird, an den Ausgang Q des D-Flipflops durchgeschaltet. Ein solcher Taktimpuls "1" ergibt sich bei einem DVK-Ausgangssignal "0", das bei endlichen Werten von RW gebildet wird (Wasserpegel im Behälter 1 überdeckt die Meßelektrode S2 mindestens teilweise).

Ist das Ausgangssignal des zweiten Differenzverstärkers DVW "1" (RW gleich unendlich, da der Wasserpegel unter die Meßelektrode S2 abgesunken ist), schaltet DVW über das Relais RIW und den Schalter KW das Ventil 4 in der Zuflußleitung 2. Dieses Ausgangssignal "1" führt jedoch wegen des Inverters IV zu keinem Taktimpuls (das heißt Impuls "0") für das D-Flipflop, so daß die am S-Eingang anliegende Information nicht an den Q-Ausgang durchgeschaltet wird. Das Kältaggregat wird somit nicht umgeschaltet.

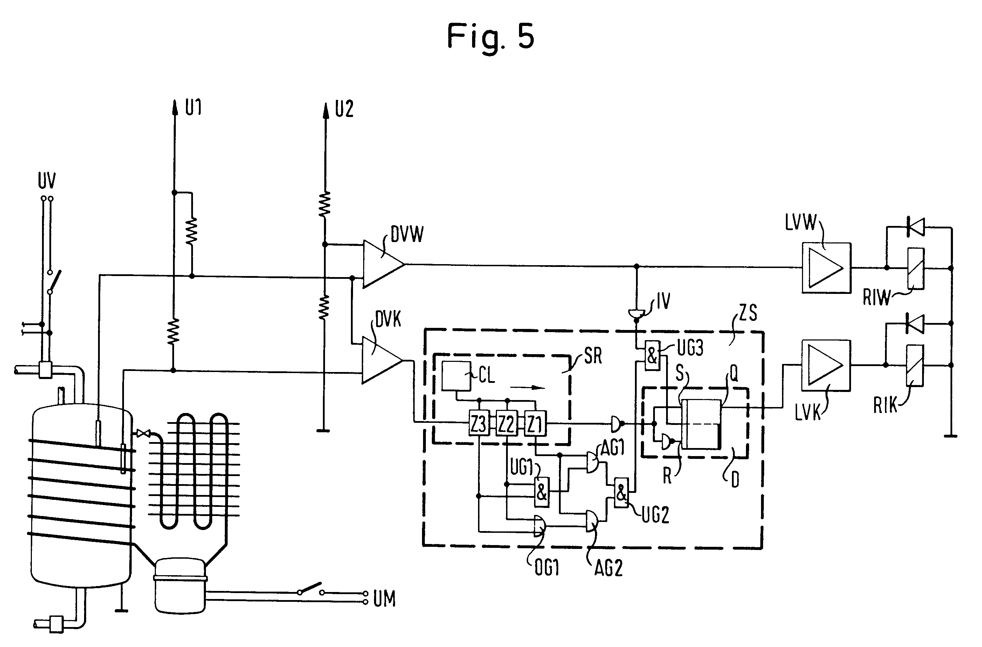

Figur 5 zeigt eine Auswerteschaltung AW, die die anhand der Figuren 3 und 4 beschriebenen Schaltungsfunktionen kombiniert. Die Auswerteschaltung nach Figur 5 unterscheidet sich von den Auswerteschaltungen nach den Figuren 3 und 4 dadurch, daß die logische Verknüpfungsschaltung nach Figur 3 ein weiteres Und-Gatter UG3 enthält, das eingangsseitig mit dem Ausgang des Und-Gatters UG2 und mit dem Inverter IV aus Figur 4 verbunden ist, der die Ausgangssignale des zweiten Differenzverstärkers DVW invertiert. Der Ausgang dieses zusätzlichen Und-Gatters UG3 - nicht jedoch wie in der Schaltung nach Figur 3 der Ausgang des Und-Gatters UG2 - führt auf den Takt eingang des D-Flipflops nach Figur 3.
Das Und-Gatter UG3 gibt Ausgangssignale "1" ab und taktet damit das D-Flipflop, sofern jeweils das Und-Gatter UG2 und der Inverter IV Signale "1" abgeben. Das Und-Gatter UG2 gibt bei den Eingangskombinationen At3,At2,At1 (in Z3,Z2,Z1) gleich "0","0","1" und "1","1","0" Ausgangssignale "1" ab, also in den Fällen, in denen nach der anhand der Figur 3 beschriebenen Bedingung das Kälteaggregat umgeschaltet werden soll. Der Inverter IV gibt Ausgangssignale "1" ab, wenn der zweite Differenzverstärker DVW Ausgangssignale "0" abgibt, also in den Fällen, in denen der Widerstand RW an der zweiten Meßelektrode S2 endliche Werte hat, der Wasserpegel im Behälter 1 also nicht unter die zweite Meßelektrode S2 gesunken ist.
Ein Absinken des Wassers unter die Elektrode S2 führt zu einem Widerstandswert RW unendlich, damit zu einem Ausgangssignal "1" am zweiten Differenzverstärker DVW, weiterhin zu einem Signal "0" am Ausgang des Inverters IV und - unabhängig vom weiteren UG2-Eingangswert - zu einem Signal "0" am Ausgang des Und-Gatters UG3. Damit wird dem D-Flipflop beim Absinken des Wassers im Behälter 1 bei dieser Ausgestaltung der Auswerteschaltung nach Figur 5 kein Taktimpuls zugeführt. Das Kälteaggregat M verbleibt in der momentanen Schaltstellung (Schalter KK offen oder geschlossen).

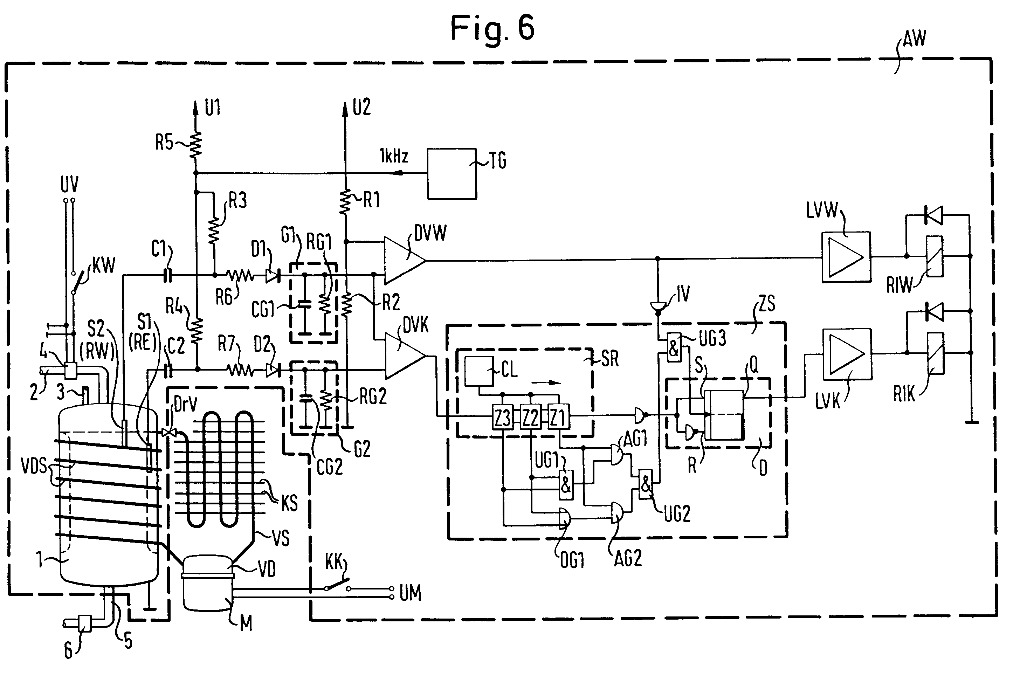

Figur 6 zeigt eine bevorzugte Ausführungsform, die eine Kombination der Auswerteschaltungen nach den Figuren 2 und 5 darstellt. Die Ausführungsform nach Figur 6 weist damit, basierend auf der Ausführungsform nach Figur 1, die anhand der Figuren 2 bis 5 beschriebenen Schaltungsfunktionen auf.

Die Auswerteschaltung AW (Figuren 2 bis 6) enthält eine Mikroprozessor-Schaltung, die zumindest die Funktionen des Taktgenerators TG (Figuren 2 und 6) und der verschiedenen Zeitsteuerungen (Figuren 3, 5 und 6) realisiert.

## Patentansprüche

1. Anordnung, insbesondere für einen Getränkeautomaten, mit einem zur Vorratshaltung, Kühlung und Karbonisierung von Wasser dienenden, eine Zufluß- und eine Abflußleitung (2,5) aufweisenden Behälter (1) mit elektrisch leitfähiger Innenwandung, in welchem das Wasser mit einem im Bereich der Seitenwandung angeordnetem Wärmetauscher (VDS) eines Kälteaggregats(M) im Behälterwandungsbereich einen Eismantel bildend gekühlt wird, und mit einer Auswerteschaltungsanordnung (AW), die eine erste Meßelektrode (S1) enthält, zwischen der und der Behälterinnenwandung in Abhängigkeit der Eismanteldicke ein veränderbarer ohmscher Widerstand (RE) besteht, und die in Abhängigkeit des veränderbaren Widerstandes(RE) das Kälteaggregat(M) ein- bzw. ausschaltet(RIK, KK),
**dadurch gekennzeichnet**,
daß im Behälter eine zweite mit der Auswerteschaltungsanordnung (AW) verbundene Meßelektrode(S2) in einem bezüglich der ersten Meßelektrode(S1) grösseren horizontalen Abstand zur Behälterinnenwandung angeordnet ist, welche einen veränderbaren Referenzwiderstandswert(RW) für den Schaltpunkt des Kälteaggregats liefert, daß der vertikale Abstand der ersten Meßelektrode(S1) zum Behälterboden geringer ist als der entsprechende vertikale Abstand der zweiten Meßelektrode(S2), daß die Auswerteschaltungsanordnung(AW) das nachgeschaltete Kälteaggregat(M) einschaltet, sofern der von der ersten Meßelektrode(S1) abgegriffene ohmsche Widerstand(RE) kleiner ist als der von der zweiten Meßelektrode (S2) abgegriffene ohmsche Widerstand(RW) und daß die Auswerteschaltungsanordnung (AW) bei sich umgekehrendem Verhältnis der beiden Widerstandswerte(RE, RW) das Kälteaggregat(M) ausschaltet.

2. Anordnung nach Anspruch 1,
**dadurch gekennzeichnet**,
daß der von der ersten Meßelektrode(S1) abgegriffene Widerstand (RE) mit einem weiteren Widerstand (R4) eine erste Widerstandsbrückenschaltung bildet, daß der von der zweiten Meßelektrode(S2) abgegriffene Referenzwiderstand(RW) Teil einer weiteren Widerstandsbrückenschaltung(R3, RW) bildet und daß die Mittelabgriffe beider Widerstandsbrückenschaltungen mit den Eingängen eines ersten Differenzverstärkers(DVK) verbunden sind.

3. Anordnung nach Anspruch 1 oder 2,
**dadurch gekennzeichnet**,
daß die Meßstrecken zwischen der ersten bzw. zweiten Meßelektrode (S1, S2) zur Innenwandung des Behälters(1) mit höherfrequentem Wechselstrom beaufschlagt sind.

4. Anordnung nach Anspruch 3,
**dadurch gekennzeichnet**,
daß der Wechselstrom über einen ersten bzw. zweiten Kondensator (C1, C2) den Meßelektroden (S2, S1) zugeführt wird.

5. Anordnung nach Anspruch 3 oder 4,
**dadurch gekennzeichnet**,
daß der Wechselstrom für die Auswertung gleichgerichtet (D1, D2) wird.

6. Anordnung nach Anspruch 1,
**dadurch gekennzeichnet**,
daß die Auswerteschaltungsanordnung(AW) einen Taktgenerator(TG) aufweist, der zwischen einer Spannungsquelle(U1) und je über eine Serienschaltung aus einem ersten bzw. zweiten Widerstand(R3; R4) und einem ersten bzw. zweiten Kondensator(C1; C2) mit der zweiten und ersten Meßelektrode (S2, S1) verbunden ist, und daß das Potential zwischen dem ersten bzw. zweiten Widerstand (R3; R4) und dem ersten bzw. zweiten Kondensator (C1; C2) über je einen Gleichrichter(D1; D2) und je eine mit Masse verbundene, aus je einem Kondensator (CG1; CG2) und einem dazu parallelgeschalteten Widerstand(RG1; RG2) gebildete Glättungsschaltungsanordnung(G1; G2) einem ersten Differenzverstärker (DVK) zugeführt wird.

7. Anordnung nach Anspruch 6,
**dadurch gekennzeichnet**,
daß der Taktgenerator(TG) eine Taktfrequenz von 1 kHz erzeugt.

8. Anordnung nach einem der Ansprüche 4 bis 7,
**dadurch gekennzeichnet**,
daß der erste Kondensator(C1) einen gegenüber dem zweiten Kondensator(C2) geringeren Kapazitätswert aufweist.

9. Anordnung nach Anspruch 8,
**dadurch gekennzeichnet**,
daß das Verhältnis (C1/C2) der Kapazitätswerte des ersten und zweiten Kondensators (C1, C2) etwa 1/3 beträgt.

10. Anordnung nach Anspruch 2,
**dadurch gekennzeichnet**,
daß die zweite Meßelektrode(S2) mit einem ersten Eingang(E21) eines zweiten Differenzverstärker(DVW) verbunden ist, daß an dessen zweitem Eingang(E22) ein einen Behältersollwasserstand entsprechendes Bezugspotential(UR) anliegt, und daß der zweite Differenzverstärker(DVW) ausgangsseitig ein in der Zuflußleitung (2) des Behälters(1) angeordnetes, elektrisch betätigbares Ventil (4) schaltet.

11. Anordnung nach einem der Ansprüche 2 bis 10,
**dadurch gekennzeichnet**,
daß die Auswerteschaltungsanordnung (AW) die von den Meßelektroden(S1, S2) abgegriffenen Widerstandswerte(RE, RW) zyklisch abfragt, zu jedem Abfragezeitpunkt bezüglich eines Bezugswiderstandes (zum Beispiel RE) bzw. eines entsprechenden Bezugspotentials das Verhältnis der Widerstandswerte (RW/RE) beziehungsweise der entsprechenden Potentialwerte bildet, auf Werte von "größer/gleich 1" und "kleiner 1" überprüft, und jeweils mindestens drei zeitlich aufeinanderfolgenden Werte dieser Widerstands- bzw. Potentialverhältnisse miteinander vergleicht, und daß die Auswerteschaltung(AW) das Kälteaggregat(M) nur dann umschaltet, wenn der zweite und der dritte, gegebenenfalls weitere Verhältniswerte zueinander gleich und gegenüber dem ersten Verhältniswert ungleich sind.

12. Anordnung nach einem der vorstehenden Ansprüche,
**dadurch gekennzeichnet**,
daß die Auswerteschaltung(AW) in der Weise ausgestaltet ist, daß sie das Kälteaggregat (M) bei Auftreten eines unendlichen Wertes des von der zweiten Meßelektrode(S2) abgegriffenen Widerstandes (RW) nicht umschaltet.

13. Anordnung nach Anspruch 6,
**dadurch gekennzeichnet**,
daß die Auswerteschaltungsanordnung(AW) eine Mikroprozessor-Schaltung enthält, die zumindest die Funktionen des Taktgenerators (TG) und einer Zeitsteuerungsschaltung(ZS) realisiert.

## Claims

1. Arrangement, in particular for an automatic beverage dispenser, with a container (1), which displays an inflow duct (2) and an outflow duct (5) and serves for the storage, cooling and carbonating of water and in which the water is cooled by a heat exchanger (VDS), which is arranged in the region of the side wall, of a refrigerating unit (m) to form an ice coating in the container wall region, with an electrically conductive inner wall and with an evaluating circuit arrangement (AW), which contains a first measuring electrode (S1), between which and the container inner wall a resistive impedance (RE) exists, which is variable in dependence on the thickness of the ice coating, and which switches (RIK, KK) the refrigerating unit (M) on and off in dependence on the variable resistance (RE), characterised thereby, that a second measuring electrode (S2), which is connected with the evaluating circuit arrangement (AW), is arranged in the container at an horizontal spacing, which is greater than that of the first measuring electrode (S1) from the container inner wall, and supplies a variable reference resistance value (RW) for the switching point of the refrigerating unit (M), that the vertical spacing of the first measuring electrode (S1) from the container base is less than the corresponding vertical spacing of the second measuring electrode (S2), that the evaluating circuit arrangement (AW) switches on the refrigerating unit (M) connected therebehind when the resistive impedance (RE) detected by the first measuring electrode (S1) is smaller than the resistive impedance (RW) detected by the second measuring electrode (S2) and that the evaluating circuit arrangement (AW) switches the refrigerating unit (M) off in the case of the reversing relationship of both the resistance values (RE, RW).

2. Arrangement according to claim 1, characterised thereby, that the resistance (RE) detected by the first measuring electrode (S1) together with a further resistance (R4) forms a first resistance bridge circuit, that the reference resistance (RW) detected by the second measuring electrode (S2) forms part of a further resistance bridge circuit (R3, RW) and that the centre taps of both resistance bridge circuits are connected with the inputs of a first differential amplifier (DVK).

3. Arrangement according to claim 1 or 2, characterised thereby, that the measurement paths between the inner wall of the container (1) and each of the first measuring electrode (S1) and the second measuring electrode (S2) are acted on by alternating current of higher frequency.

4. Arrangement according to claim 3, characterised thereby, that the alternating current is fed to each of the measuring electrodes (S2, S1) by way of a respective first and second capacitor (C1, C2).

5. Arrangement according to claim 3 to 4, characterised thereby, that the alternating current is rectified (D1, D2) for the evaluation.

6. Arrangement according to claim 1, characterised thereby, that the evaluting circuit arrangement (AW) displays pulse generator (TG), which is connected between a voltage source (U1) and by way of a respective series connection each of a first or second resistor (R3; R4) and a first or second capacitor (C1; C2) respectively with the second measuring electrode (S2) and the first measuring electrode (S1) and that the potential between the first or second resistor (R3; R4) and the first or second capacitor (C1, C2) is fed to a first differential amplifier (DVK) by way of a respective rectifier (D1; D2) and a respective smoothing circuit (G1; G2), each formed of a respective capacitor (CG1; CG2) and a resistance (RG1; RG2) connected in parallel therewith.

7. Arrangement according to claim 6, characterised thereby, that the pulse generator (TG) generates a pulse frequency of 1 kilohertz.

8. Arrangement according to one of the claims 4 to 7, characterised thereby, that the first capacitor (C1) has a lower value of capacitance than the second capacitor (C2).

9. Arrangement according to claim 8, characterised thereby, that the ratio (C1/C2) of the capacitance value of the first capacitor (C1) to that of second capacitor (C2) amounts to about 1:3.

10. Arrangement according to claim 2, characterised thereby, that the second measuring electrode (S2) is connected with a first input (E21) of a second differential amplifier (DVW), that at the second input (E22) of which a reference potential (UR) is present, which corresponds to a target water level for the container, and that the second differential amplifier (DVW) at its output switches an electrically actuable value (4) arranged in the inflow duct (2) of the container (1).

11. Arrangement according to one of the claims 2 to 10, characterised thereby, that the evaluating circuit arrangement (AW) cyclically interrogates the resistance values (RE, RW) detected by the measuring electrodes (S1, S2), forms the ratio (RW/RE) of either the resistance values or of the corresponding potential values to either a reference resistance (for example RE) or a corresponding reference potential at each time of interrogation, checks for values of "greater than or equal to 1" and "less than 1" and each time compares at least three values, which follow one the other in time, of these resistance or potential ratios one with the other, and that the evaluating circuit arrangement (AW) switches the refrigerating unit (M) over only when the second and the third and, in a given case, further ratio values are one equal to the other and not equal to the first ratio value.

12. Arrangement according to one of the preceding claims, characterised thereby, that the evaluating circuit arrangement (AW) is structured in such a manner that it does not switch the refrigerating unit (M) over on the occurrence of an infinite value of the resistance (RW) detected by the second measuring electrode (S2).

13. Arrangement according to claim 6, characterised thereby, that the evaluating circuit arrangement (AW) contains a microprocessor circuit which realises at least the functions of the pulse generator (TG) and a time control circuit (ZS).

## Revendications

1. Agencement destiné en particulier à un distributeur automatique de boissons, comportant un réservoir (1) servant au conditionnement, au refroidissement et à la gazéification de l'eau, celui-ci étant muni d'un conduit d'entrée et d'un conduit de sortie et comportant une paroi intérieure électriquement conductrice, dans lequel l'eau est refroidie, à l'aide d'un échangeur thermique (VDS) d'un groupe frigorifique (M) agencé à proximité de la paroi latérale de celui-ci, formant une couche de glace à proximité de la paroi du réservoir, et comportant un agencement (AW) formant circuit d'exploitation comportant une première électrode de mesure (S1), une résistance ohmique variable (RE) fonction de l'épaisseur de la couche de glace étant établie entre cette électrode et la paroi intérieure du réservoir, et qui, selon le cas, enclenche ou coupe (RIK, KK) le groupe frigorifique (M) en fonction de la résistance variable (RE)
caractérisé en ce qu'il comporte
une seconde électrode de mesure (S2) agencée dans le réservoir, laquelle est reliée à l'agencement (AW) formant circuit d'exploitation et est située à une distance horizontale plus importante de la paroi intérieure du réservoir que la première électrode de mesure (S1), laquelle fournit une valeur de résistance formant référence variable (RW) pour le point d'enclenchement du groupe frigorifique, la distance verticale entre la première électrode de mesure (S1) et le fond du réservoir étant plus petite que la distance verticale de la seconde électrode de mesure (S2) par rapport à celui-ci, l'agencement (AW) formant circuit d'exploitation enclenchant le groupe frigorifique (M) agencé en série dans le circuit aussitôt que la résistance ohmique (RE) mesurée par la première électrode de mesure (S1) est plus petite que la résistance ohmique (RW) mesurée par la seconde électrode de mesure (S2) et l'agencement (AW) formant circuit d'exploitation coupant le groupe frigorifique (M) quand la relation existant entre les deux valeurs des résistances (RE, RW) s'inverse d'elle même.

2. Agencement selon la revendication 1, caractérisé en ce que la résistance (RE) mesurée par la première électrode de mesure (S1) forme avec une autre résistance (R4) un premier circuit formant pont de résistances, la résistance de référence (RW) mesurée par la seconde électrode de mesure (S2) constituant une partie d'un autre circuit formant pont de résistances (R3, RW) et les points-milieux des deux circuits formant ponts de résistances sont reliés aux entrées d'un premier amplificateur différentiel (DVK).

3. Agencement selon la revendication 1 ou 2, caractérisé en ce que les distances mesurées respectivement entre la première et la seconde électrodes de mesure (S1, S2) et la paroi intérieure du réservoir (1) sont parcourues par un courant alternatif haute fréquence.

4. Agencement selon la revendication 3, caractérisé en ce que le courant alternatif est envoyé vers les électrodes de mesure (S2, S1) à travers un premier et un second condensateur (C1, C2) respectivement.

5. Agencement selon la revendication 3 ou 4, caractérisé en ce que le courant alternatif est redressé (D1, D2) pour l'exploitation.

6. Agencement selon la revendication 1, caractérisé en ce que l'agencement (AW) formant circuit d'exploitation comporte un générateur d'impulsions (TG) qui est connecté aux seconde et première électrodes (S1, S2) entre une source de tension (U1) et chacun de circuits-séries respectifs constitués d'une première et d'une seconde résistances (R3; R4) respectivement et d'un premier et d'un second condensateurs (C1; C2) respectivement, et en ce que les potentiels existant entre les première et seconde résistances (R3; R4) respectivement et les premier et second condensateurs (C1; C2) respectivement sont envoyés à un premier amplificateur différentiel (DVK), chacun à travers des redresseurs respectifs (D1; D2) et des agencements formant circuits de lissage respectifs (G1; G2) reliés chacun à la masse et constitués respectivement d'un condensateur (CG1; CG2) et d'une résistance (RG1; RG2) agencés en parallèle.

7. Agencement selon la revendication 6, caractérisé en ce que le générateur d'impulsions (TG) génère une fréquence d'impulsions de 1 kHz.

8. Agencement selon l'une quelconque des revendications 4 à 7, caractérisé en ce que le premier condensateur (C1) a une valeur capacitive plus petite que celle du second condensateur (C2).

9. Agencement selon la revendication 8, caractérisé en ce que le rapport (C1/C2) des valeurs des capacités des premier et second condensateurs (C1, C2) est à peu près égal à 1/3.

10. Agencement selon la revendication 2, caractérisé en ce que la seconde électrode de mesure (S2) est connectée à une première entrée (E21) d'un second amplificateur différentiel (DVW), un potentiel de référence (UR) correspondant à un niveau théorique de l'eau dans le réservoir étant envoyé vers la seconde entrée (E22) de celui-ci, et la sortie du second amplificateur différentiel (DVW) enclenchant une vanne (4) commandée électriquement, agencée dans le conduit d'entrée (2) du réservoir (1).

11. Agencement selon l'une quelconque des revendications 2 à 10, caractérisé en ce que l'agencement (AW) formant circuit d'exploitation qui demande de manière cyclique les valeurs des résistances (RE, RW) mesurées par les électrodes de mesure (S1, S2) calcule, à chaque instant des demandes, en fonction d'une valeur de résistance de référence (par exemple RE), c'est à dire d'un potentiel de référence correspondant, le rapport des valeurs des résistances (RW/RE), c'est à dire des valeurs des potentiels correspondants, détermine si le rapport est "supérieur ou égal à 1" ou "inférieur à 1", et compare mutuellement à chaque fois au moins trois valeurs qui se suivent dans le temps de ces rapports de résistances, c'est à dire de potentiels, et le circuit d'exploitation (AW) enclenche le groupe frigorifique (M) uniquement si les deuxième et troisième valeurs du rapport, et le cas échéant d'autres valeurs, sont réciproquement égales et différentes de la première valeur du rapport.

12. Agencement selon l'une quelconque des revendications précédentes, caractérisé en ce que le circuit d'exploitation (AW) est agencé de telle sorte que le groupe frigorifique (M) n'est pas enclenché par l'entrée d'une valeur infinie de la résistance (RW) mesurée par la deuxième électrode de mesure (S2).

13. Agencement selon la revendication 6, caractérisé en ce que l'agencement (AW) formant circuit d'exploitation comporte un circuit à microprocesseur, qui remplit au moins les fonctions du générateur d'impulsions (TG) et d'un circuit de commande de synchronisation (ZS).
